# FASCICULE DE BREVET EUROPEEN

(11) **EP 4 246 495 B1**
(45) Date de publication et mention de la délivrance du brevet: **17.09.2025**
(21) Numéro de dépôt: 23161405.8
(22) Date de dépôt: 13.03.2023
(51) Int. Cl.: G08G 5/21, G08G 5/53, G08G 5/76, G01S 13/88

(54) **PROCÉDÉ DE GESTION DE L'ALTITUDE D'UN AÉRONEF MUNI D'UN RADAR AÉROPORTÉ**
VERFAHREN ZUR HÖHENVERWALTUNG EINES LUFTFAHRZEUGS, DAS MIT EINEM LUFTRADAR AUSGESTATTET IST
METHOD FOR MANAGING THE ALTITUDE OF AN AIRCRAFT PROVIDED WITH AN AIRBORNE RADAR

(30) Priorité: 17.03.2022 FR 2202328
(43) Date de publication de la demande: 20.09.2023
(73) Titulaire: THALES, 92190 Meudon (FR)
(72) Inventeur: LEGER, Nicolas, 33700 MERIGNAC (FR); CORRETJA, Vincent, 33700 MERIGNAC (FR); KEMKEMIAN, Stéphane, 78990 ELANCOURT (FR)
(74) Mandataire: Atout PI Laplace

(56) Documents cités:
- US-A- 5 311 184
- US-B1- 10 556 703
- FASANO GIANCARMINE ET AL: "Sense and avoid for unmanned aircraft systems", IEEE AEROSPACE AND ELECTRONIC SYSTEMS MAGAZINE, IEEE SERVICE CENTER, PISCATAWAY, NJ, US, vol. 31, no. 11, 1 November 2016 (2016-11-01), pages 82 - 110, XP011635900, ISSN: 0885-8985, [retrieved on 20161205], DOI: 10.1109/MAES.2016.160116
- PETROVIC JELENA ET AL: "Radar GIS for site acceptance testing", 2017 INTERNATIONAL SYMPOSIUM ELMAR, CROATIAN SOCIETY ELECTRONICS IN MARINE - ELMAR, 18 September 2017 (2017-09-18), pages 225 - 228, XP033272765, DOI: 10.23919/ELMAR.2017.8124473
- HURTAUD YVONICK ET AL: "Une préfiguration des futures aides tactiques: le code PREDEM", OBSERVATION DES CÔTES ET DES OCÉANS : SENSEURS ET SYSTÈMES (OCOSS), 1 February 2008 (2008-02-01), XP093271989, Retrieved from the Internet <URL:https://www.researchgate.net/publication/282175529_Une_prefiguration_des_futures_aides_tactiques_le_code_PREDEM>

## Description

L'invention porte sur un procédé de gestion de l'altitude d'un aéronef muni d'un radar aéroporté, tel un avion, un hélicoptère, un drone, un ballon dirigeable, ...

La présente invention concerne un outil d'aide à la décision tactique au profit des opérationnels. Il s'agit d'une méthode de détermination et de contrôle d'une altitude de consigne améliorée, pour la détection de cibles, par exemple maritimes ou aériennes, en fonction des conditions de propagation des ondes du radar aéroporté.

L'objectif de la présente invention est de disposer d'un procédé rapide pour le calcul d'une altitude de consigne d'emploi d'un radar aéroporté pour satisfaire la détection de cibles d'intérêt en fonction de l'environnement et des conditions de propagation des ondes radar, et d'avoir une étape de contrôle de cette altitude de consigne en mesurant les performances du radar et en les corrélant avec des données externes.

Ce problème est d'intérêt pour les opérationnels ou opérateurs, car, à ce jour, c'est une opération qu'ils effectuent manuellement et qui leur coûte beaucoup de temps et de carburant, ce qui implique une diminution de la durée de la mission opérationnelle.

Le logiciel PREDEM (divulgué par exemple dans le document « Une Préfiguration des Futures Aides Tactiques » de Y. Hurtaud, J. Claverie, M. Aïdonidis et E. Mandine, Dossier Observation des Côtes et des Océans : Senseurs et Systèmes (OCOSS), 2008) développé par la société CS GROUP, et plus précisément le mode « Recherche en surface » semble répondre au problème.

En effet, le mode « Recherche en surface » consiste à conseiller au pilote d'un aéronef la meilleure altitude de vol pour détecter une cible en surface. Pour cela, le logiciel PREDEM exécute un certain nombre de fois le code de propagation d'un modèle de propagation avancé APM pour acronyme de « Avanced Propagation Model » en langue anglaise, en faisant varier l'altitude de l'émetteur (maximum de 20 altitudes). L'inclinaison de l'antenne de l'aéronef en fonction de l'altitude de vol peut être prise en compte au niveau de la base de données senseurs. L'écran de sortie se présente sous forme d'un ensemble de barres-graphe horizontaux représentant le paramètre choisi (dont la probabilité de détection) pour chaque hauteur de vol.

Néanmoins, cette méthode présente au moins deux inconvénients.

Tout d'abord, les modèles de propagation d'environnement sont fondés uniquement sur des prévisions météorologiques qui ne sont jamais confrontées à des données réelles d'environnement.

En outre, il n'existe pas de contrôle de l'altitude calculée.

Aussi, si les modèles de conditions d'environnement ne sont pas valides (conditions de propagation « atypiques »), l'altitude estimée est erronée et l'opérateur du capteur radar n'est pas informé.

Un but de l'invention est de pallier les problèmes précédemment cités.

Il est proposé, selon un aspect de l'invention, un procédé de gestion de l'altitude d'un aéronef muni d'un radar aéroporté comprenant :
- une étape de calcul en vol d'une altitude de consigne à laquelle se place l'aéronef, comprenant une première sous-étape mettant en œuvre un modèle de propagation avancé APM utilisant en entrée des mesures de paramètres représentatifs de l'atmosphère environnant (données météorologiques mesurées) et délivrant en sortie un coefficient d'amplification/atténuation des signaux radar utilisé en entrée d'une deuxième sous-étape de calcul d'une altitude de consigne à partir d'une estimation des performances de détection radar utilisant un modèle du radar ; et
- une étape de contrôle de l'altitude de consigne à laquelle s'est mis l'aéronef utilisant une comparaison entre une estimation des performances de détection du radar utilisant un modèle du radar et une mesure des performances de détection du radar.

Dans un mode de mise en œuvre le procédé comprend une étape de calcul prédéterminé d'une altitude recommandée comprenant une première sous-étape mettant en œuvre le modèle de propagation avancé APM utilisant en entrée des données prédéterminées de paramètres représentatifs de l'atmosphère environnant (données météorologiques prédéterminées) et délivrant en sortie un coefficient d'amplification/atténuation des signaux radar utilisé en entrée d'une deuxième sous-étape de calcul d'une altitude recommandée à partir d'une estimation des performances de détection radar et du modèle du radar, ladite altitude recommandée étant fournie en entrée de l'étape de calcul en vol d'une altitude de consigne pour limiter les manœuvre en vol nécessaires à l'étape de calcul en vol d'une altitude de consigne autour de cette altitude recommandée pour calculer l'altitude de consigne.

Selon un mode de mise en œuvre, les données prédéterminées de paramètres représentatifs de l'atmosphère environnant sont mises à jour en vol de l'aéronef.

Dans un mode de mise en œuvre, les performances du radar comprennent une probabilité de détection d'une cible.

Selon un mode de mise en œuvre, lesdits paramètres représentatifs de l'atmosphère environnant comprennent la température, la pression, l'hygrométrie, la vitesse du vent, et la hauteur de houle.

Dans un mode de mise en œuvre, la comparaison entre une estimation des performances de détection du radar et une mesure des performances de détection du radar de l'étape de contrôle de l'altitude de consigne utilise un premier réseau de neurones élaborant un coefficient d'atténuation/amplification des signaux radar à partir de mesures et de données prédéterminées de paramètres représentatifs de l'atmosphère environnant.

Selon un mode de mise en œuvre, la comparaison entre une estimation des performances de détection du radar et une mesure des performances de détection du radar de l'étape de contrôle de l'altitude de consigne utilise un deuxième réseau de neurones élaborant un coefficient de réflexion et une impulsivité du fouillis de mer environnant à partir de mesures de données prédéterminées de paramètres représentatifs de l'atmosphère environnant.

Dans un mode mise en œuvre, l'estimation des performances de détection du radar de l'étape de contrôle de l'altitude de consigne comprend une estimation automatique de la surface équivalente radar de la cible à partir d'une localisation d'une cible détectée par le radar et d'informations auto-déclaratives de la nature et position de la cible.

Les informations auto-déclaratives de la nature et position de la cible, peuvent être des informations de position et de déplacement du système d'identification automatique des navires environnants (AIS) pour des cibles maritimes, et peuvent être des informations de position et de déplacement du système de surveillance dépendante automatique en mode diffusion (ADS-B) pour des cibles aériennes.

Selon un mode de mise en œuvre, l'estimation des performances de détection du radar de l'étape de contrôle de l'altitude de consigne comprend une estimation manuelle par un opérateur de la surface équivalente radar (SER) de la cible à partir d'attributs de la cible comprenant la longueur, la forme, le nombre et la position des superstructures de la cible à partir des mesures du radar.

Dans un mode de mise en œuvre, l'estimation des performances de détection du radar de l'étape de contrôle de l'altitude de consigne comprend une corrélation de l'estimation automatique de la surface équivalente radar et de l'estimation manuelle par un opérateur de la surface équivalente radar.

L'invention sera mieux comprise à l'étude de quelques modes de réalisation décrits à titre d'exemples nullement limitatifs et illustrés par les dessins annexés sur lesquels :
La figure 1 illustre schématiquement un procédé de gestion de l'altitude d'un aéronef muni d'un radar aéroporté, selon un aspect de l'invention ;
La figure 2 illustre schématiquement une étape de calcul prédéterminé d'une altitude recommandée du procédé de gestion de la figure 1, selon un aspect de l'invention ;
La figure 3 illustre schématiquement une étape de calcul en vol d'une altitude de consigne du procédé de gestion de la figure 1, selon un aspect de l'invention ;
La figure 4 illustre schématiquement une étape de contrôle de l'altitude de consigne une étape de contrôle de l'altitude de consigne, selon un autre aspect de l'invention ;
La figure 5 illustre schématiquement un premier réseau de neurones et un deuxième réseau de neurones de l'étape de contrôle de l'altitude de consigne, selon d'autres aspects de l'invention ; et
La figure 6 illustre schématiquement une étape de contrôle de l'altitude de consigne une étape de contrôle de l'altitude de consigne comprenant le premier réseau de neurones et/ou le deuxième réseau de neurones, selon un autre aspect de l'invention.

Sur l'ensemble des figures, les éléments ayant des références identiques sont similaires.

Dans la description qui suit les exemples décrits se rapportent à des cibles maritimes en utilisant des informations de position et de déplacement du système d'identification automatique des navires environnants AIS, mais peuvent, en variant également être réalisés pour des cibles aériennes, en utilisant des informations de position et de déplacement du système de surveillance dépendante automatique en mode diffusion (ADS-B).

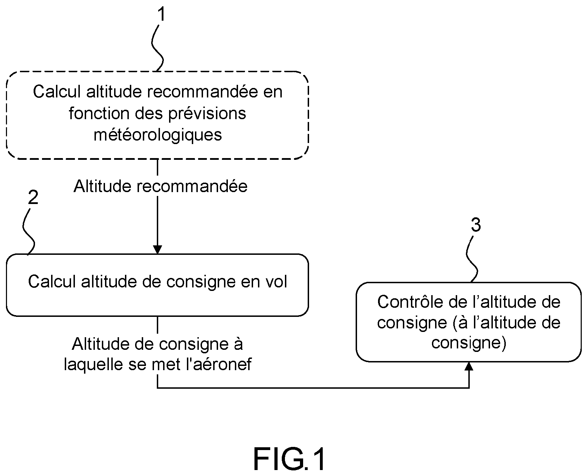

La figure 1 représente schématiquement un procédé de gestion de l'altitude d'un aéronef muni d'un radar aéroporté, selon un aspect de l'invention.

Le procédé comprend une étape 1 optionnelle de calcul prédéterminé d'une altitude recommandée, une étape 2 de calcul en vol d'une altitude de consigne, et une étape 3 de contrôle de l'altitude de consigne.

L'étape 1 optionnelle de calcul prédéterminé d'une altitude recommandée peut être effectuée en préparation de mission.

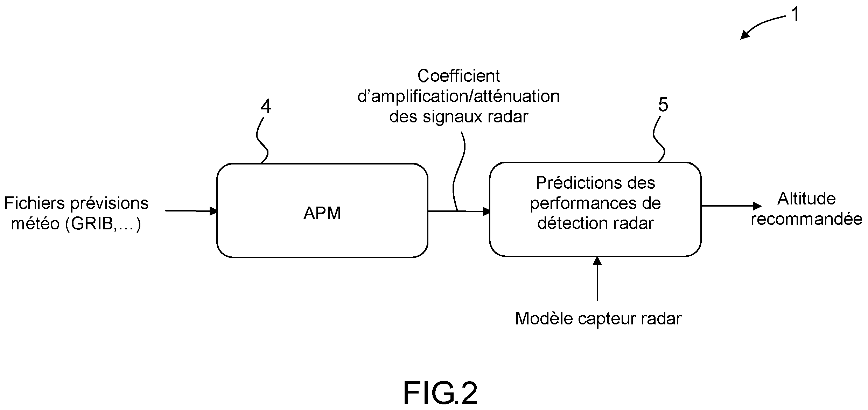

La figure 2 illustre schématiquement l'étape 1 optionnelle de calcul prédéterminé d'une altitude recommandée du procédé de gestion de la figure 1, selon un aspect de l'invention.

L' étape 1 optionnelle de calcul prédéterminé d'une altitude recommandée comprend une première sous-étape 4 mettant en œuvre un modèle de propagation avancé APM, par exemple comme décrit dans la solution développée dans le document « Une Préfiguration des Futures Aides Tactiques » cité précédemment, et à partir de la connaissance de l'atmosphère prévisionnelle et de la connaissance des caractéristiques du capteur radar et du porteur.

Le modèle de propagation avancé APM utilise en entrée des données prédéterminées de paramètres représentatifs de l'atmosphère environnant (données météorologiques) et délivrant en sortie un coefficient d'amplification/atténuation des signaux radar. Ce coefficient d'amplification/atténuation des signaux radar est utilisé en entrée d'une deuxième sous-étape 5 de calcul d'une altitude recommandée à partir d'une estimation des performances de détection radar et du modèle du radar, l'altitude recommandée étant fournie en entrée de l'étape de calcul en vol d'une altitude de consigne pour limiter les manœuvre en vol nécessaire à l'étape 2 de calcul en vol d'une altitude de consigne autour de cette altitude recommandée pour calculer l'altitude de consigne.

La deuxième sous-étape 5 de calcul d'une altitude recommandée effectue une estimation, par exemple à partir des estimations de performances de détection basée sur un modèle statistique du fouillis radar et les sortie du modèles APM pour les pertes de propagation dans l'atmosphère.

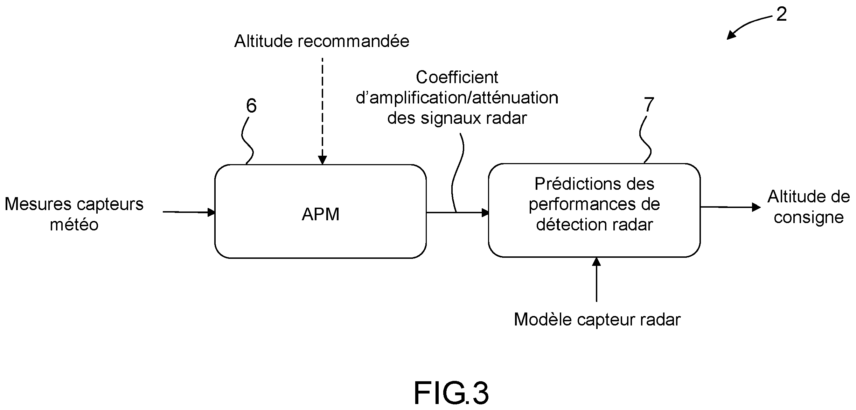

La figure 3 illustre schématiquement l'étape 2 de calcul en vol d'une altitude de consigne du procédé de gestion de la figure 1, selon un aspect de l'invention.

L'étape 2 de calcul en vol d'une altitude de consigne comprend une première sous-étape 6 mettant en œuvre un modèle de propagation avancé APM utilisant en entrée des mesures de paramètres représentatifs de l'atmosphère environnant (mesures de données météorologiques) et délivrant en sortie un coefficient d'amplification/atténuation des signaux radar utilisé en entrée d'une deuxième sous-étape 7 de calcul d'une altitude de consigne à partir d'une estimation des performances de détection radar utilisant un modèle du radar.

Par exemple, les données prédéterminées de paramètres représentatifs de l'atmosphère environnant peuvent être mises à jour en vol de l'aéronef, par une liaison de communication de l'aéronef avec le sol.

Le calcul 2 de l'altitude recommandée en fonction des informations disponibles en vol est effectué en conditions opérationnelles (en vol) et consiste à intégrer une méthode de prédiction 7 de l'altitude recommandée d'utilisation du radar en fonction des conditions de propagation 6 (APM) dans le traitement embarqué.

La prédiction 7 peut être autonome, i.e. la connaissance de l'atmosphère pour le calcul de l'environnement peut se fonder uniquement sur les informations issues des capteurs embarqués sur l'aéronef (température, pression, hygrométrie, ...).

La prédiction 7 peut également utiliser une altitude recommandée fournie par l'étape de calcul 1, sur une altitude recommandée calculée avant la mission, lorsque l'aéronef est au sol, permettant limiter les manœuvres en vol nécessaires à l'étape de calcul en vol d'une altitude de consigne autour de cette altitude recommandée pour calculer l'altitude de consigne.

En variante, la prédiction 7 peut être connectée, i.e. la connaissance de l'atmosphère pour le calcul de l'environnement peut se fonder sur les informations issues des capteurs embarqués sur la plateforme et sur une altitude recommandée calculée 1 au cours de la mission, lorsque l'aéronef est en vol, les prévisions météo étant réactualisées dans l'hypothèse où l'aéronef peut recevoir ces informations.

L'aéronef se place à l'altitude de consigne afin que l'étape 3 de contrôle de l'altitude de consigne puisse être réalisée.

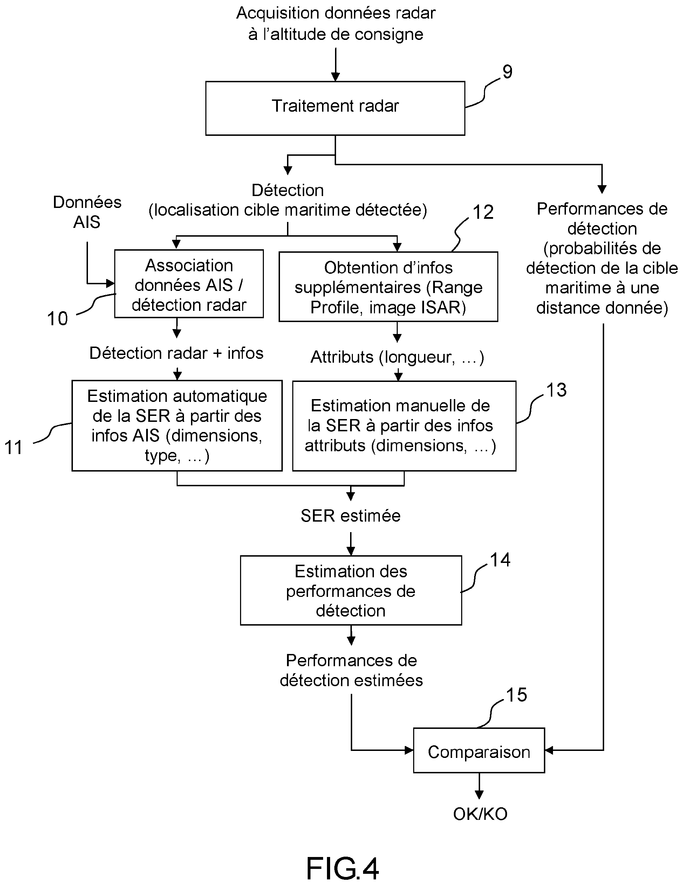

La figure 4 représente schématiquement l'étape 3 de contrôle de l'altitude de consigne à laquelle s'est placé l'aéronef.

Le radar aéroporté effectue des acquisitions de données radar à l'altitude de consigne à laquelle s'est placé l'aéronef.

Un traitement 9 classique des données radar acquises est effectué, et délivre en sortie des performances de détection constatées ou probabilités de détection de la cible maritime à une distance donnée. Le traitement 9 délivre également en sortie une détection radar ou localisation d'une cible maritime détectée.

La détection radar est utilisée pour une estimation automatique 11 de la surface équivalente radar SER, en fonction de la dimension des cibles (si L < 10 m, SER = 10 m², si L ∈ [10, 100], SER = 100 m²), de la cible maritime à partir d'une association 10 de la détection radar ou localisation d'une cible maritime détectée par le radar et des informations de position et de déplacement du système d'identification automatique des navires environnants AIS.

La détection radar peut également, en alternative ou en combinaison, être utilisée pour une estimation manuelle 13 par un opérateur de la surface équivalente radar SER, par exemple par expertise de l'opérateur radar, de la cible maritime à partir d'attributs de la cible maritime comprenant la longueur, l'allure, le nombre et la position des superstructures de la cible maritime obtenues 12 à partir des mesures du radar.

Lorsque le procédé effectue à la fois l'estimation automatique 11 de la surface équivalente radar SER et l'estimation manuelle 13 par un opérateur de la surface équivalente radar SER, une corrélation est effectuée, comme une moyenne pondérée, pour en faire une surface équivalente radar SER estimée résultante.

Concernant la prédiction de la SER (Surface Equivalente de cibles en fonction d'informations coopératives (AIS 10 et/ou observations 12), les performances du traitement reposent sur la fiabilité des informations utilisées.

Dans ce contexte, il est indispensable de connaitre le type de navire correspondant à la détection radar. Cette information peut être accessible via des données AIS transmises par les navires civils ou par expérience de l'utilisateur en fonction de ce qu'il voit sur son outil de visualisation.

L'AIS est un système de communication fondé sur l'envoi périodique de messages VHF (pour acronyme de « Very High Frequency » en langue anglaise) par des navires. La convention SOLAS (pour acronyme de « Safety Of Life At Sea » en langue anglaise) impose que tout navire vérifiant certaines conditions réglementaires soit équipé d'un tel système.

Il existe deux types d'informations qui sont transmises par le système AIS : les informations dites dynamiques, qui sont transmises toutes les 2 à 10 secondes et les informations dites statiques, qui sont transmises toutes les 6 minutes. Les informations statiques comprennent le nom du navire, les dimensions du navire, et la destination.

Une association (géométrique par exemple) est réalisées entre les détections radar et les données AIS. Pour cela, des fenêtres sont définis autour de chaque détection radar et selon une base de temps commune, on associe, pour chaque détection radar), la piste AIS (s'il y en a une) qui se trouve dans la fenêtre définie.

Les données de sortie sont les mêmes infos qu'une détection radar enrichie des infos AIS.

A partir des informations de dimensions du navire, il est possible d'en déduire une classe de SER.

L'estimation automatique de la SER à partir des infos AIS ou attributs se fait, par exemple, à partir de la longueur de la cible :
- si la longueur est < 5 m → SER = 1 m²
- si la longueur est comprise entre 5 et 10 m → SER = 10 m²
- ...

En ce qui concerne les observations, l'utilisateur peut obtenir des informations (longueur, etc.) sur une détection (via un profil distance ou une image ISAR) et ainsi en déduire, par expérience, une classe de SER.

La prédiction de SER via les informations AIS est automatisable alors qu'elle ne l'est pas lorsque l'utilisateur intervient dans cette chaîne de traitement.

Il est effectué une vérification de cohérence ou comparaison 15 entre les performances (délivrées par le traitement radar 9) en termes de capacité de détection réelles constatées en vol sur les cibles de SER estimées à taux de fausse alarme constant, et les performances de détections attendues sur les SER estimées 14.

Les performances de détections attendues sur les SER estimées 14 utilisent les prédictions des performances de détection radar similaires à celles des sousétapes 5 et 7.

Il est possible de prédire les performances de détection radar à partir de la connaissance fine de :
- l'antenne radar (puissance émise, gain d'antenne, angle d'ouverture, ...) ;
- de la forme d'onde utilisée (fréquence de récurrence, durée de l'impulsion, bande émise, ...) ;
- du traitement employé (probabilité de fausse alarme en entrée du détecteur) ; et
- des caractéristiques de la cible (SER, vitesse, ...) ;
et en faisant des hypothèses sur l'environnement comme sur la puissance moyenne et la distribution statistique du clutter ou désordre de mer et sur le modèle de propagation dans l'atmosphère.

Après avoir capitalisé un grand nombre de données réelles de fouillis de mer avec les vérités terrain correspondantes mesurées (température, pression, vitesse du vent, hauteur de houle, hygrométrie, ...), un apprentissage des différents paramètres d'environnement est effectué, qui influent sur les prédictions de performances de détection, à savoir : les conditions de propagation, et la puissance et la statistique du fouillis de mer.

Pour cela, deux réseaux de neurones convolutifs peuvent être utilisés, par exemple réalisés selon le U-NET par exemple décrit dans le document « Convolutional networks for biomedical image segmentation », de Ronneberger, O., Fischer, P., & Brox, T. (2015, October), International Conference on Medical image computing and computer-assisted intervention (pp. 234-241), pour apprendre le comportement de ces grandeurs.

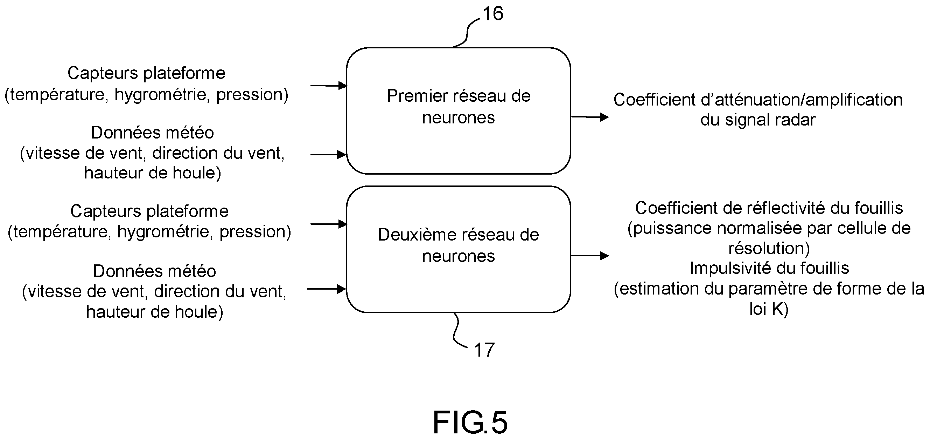

La figure 5 synthétise les entrées et sorties du réseau pour apprendre la fluctuation des grandeurs influants sur les paramètres de détection.

Ainsi, l'utilisation d'un ou des deux réseaux de neurones permet la comparaison entre performances de détection réelles et prédites sera plus fine et elle tiendra compte du caractère fluctuant de ces grandeurs.

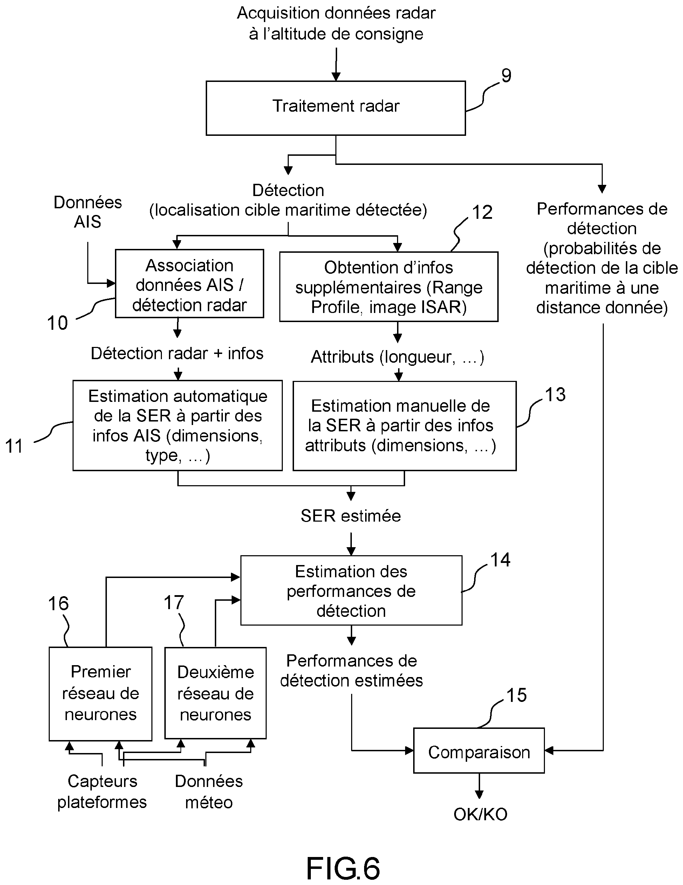

La figure 6 représente l'utilisation d'un ou des deux réseaux de neurones dans l'étape 3 de contrôle de l'altitude de consigne.

Le principe de la chaîne de contrôle est de dire si l'altitude est valide (OK) ou non (KO).

Si les performances de détection obtenues sont meilleures que l'attendu, c'est que nous sommes sur des phénomènes « favorables » et donc il n'y a pas de problème.

En revanche, si c'est l'inverse, l'opérateur est au courant et il peut changer d'altitude pour voir si ces phénomènes sont présents à d'autres altitudes et trouver l'altitude où il y a une cohérence.

L'objectif est d'automatiser cette vérification pour réaliser cette étape sur un nombre conséquent de cibles (par exemple 100) afin de consolider cette phase de contrôle.

La présente invention permet de disposer d'une méthode rapide et robuste pour le calcul de l'altitude recommandée, sans avoir d'a priori sur les conditions de propagation dans l'environnement et du senseur utilisé et d'avoir une boucle de contrôle de cette altitude en corrélant les performances du capteur radar avec une des données externes.

La présente invention permet de résoudre le problème de l'altitude en fonction des conditions de propagation qui est très coûteux en temps lors des missions opérationnelles.

## Revendications

1. Procédé de gestion de l'altitude d'un aéronef muni d'un radar aéroporté comprenant :
- une étape (2) de calcul en vol d'une altitude de consigne à laquelle se met l'aéronef, comprenant une première sous-étape (6) mettant en œuvre un modèle de propagation avancé APM utilisant en entrée des mesures de paramètres représentatifs de l'atmosphère environnant et délivrant en sortie un coefficient d'amplification/atténuation des signaux radar utilisé en entrée d'une deuxième sous-étape (7) de calcul d'une altitude de consigne à partir d'une estimation des performances de détection radar utilisant un modèle du radar ; et
- une étape (3) de contrôle de l'altitude de consigne à laquelle s'est mis l'aéronef utilisant une comparaison (15) entre une estimation des performances de détection du radar utilisant un modèle du radar et une mesure des performances de détection du radar.

2. Procédé selon la revendication 1, comprenant une étape (1) de calcul prédéterminé d'une altitude recommandée comprenant une première sous-étape (4) mettant en œuvre le modèle de propagation avancé APM utilisant en entrée des données prédéterminées de paramètres représentatifs de l'atmosphère environnant et délivrant en sortie un coefficient d'amplification/atténuation des signaux radar utilisé en entrée d'une deuxième sous-étape (5) de calcul d'une altitude recommandée à partir d'une estimation des performances de détection radar et du modèle du radar, ladite altitude recommandée étant fournie en entrée de l'étape de calcul en vol d'une altitude de consigne pour limiter les manœuvres en vol nécessaires à l'étape de calcul en vol d'une altitude de consigne autour de cette altitude recommandée pour calculer l'altitude de consigne.

3. Procédé selon la revendication 2, dans lequel les données prédéterminées de paramètres représentatifs de l'atmosphère environnant sont mises à jour en vol de l'aéronef.

4. Procédé selon l'une des revendications précédentes, dans lequel les performances du radar comprennent une probabilité de détection d'une cible.

5. Procédé selon l'une des revendications précédentes, dans lequel lesdits paramètres représentatifs de l'atmosphère environnant comprennent la température, la pression, l'hygrométrie, la vitesse du vent, et la hauteur de houle.

6. Procédé selon l'une des revendications précédentes, dans lequel la comparaison (15) entre une estimation des performances de détection du radar et une mesure des performances de détection du radar de l'étape de contrôle de l'altitude de consigne utilise un premier réseau de neurones (16) élaborant un coefficient d'atténuation/amplification des signaux radar à partir de mesures et de données prédéterminées de paramètres représentatifs de l'atmosphère environnant.

7. Procédé selon l'une des revendications précédentes, dans lequel la comparaison (15) entre une estimation des performances de détection du radar et une mesure des performances de détection du radar de l'étape de contrôle de l'altitude de consigne utilise un deuxième réseau de neurones (17) élaborant un coefficient de réflexion et une impulsivité du fouillis de mer environnant à partir de mesures de données prédéterminées de paramètres représentatifs de l'atmosphère environnant.

8. Procédé selon l'une des revendications précédentes, dans lequel l'estimation des performances de détection du radar de l'étape (3) de contrôle de l'altitude de consigne comprend une estimation automatique (11) de la surface équivalente radar (SER) de la cible à partir (10) d'une localisation d'une cible détectée par le radar et d'informations auto-déclaratives (AIS, ADS-B) de la nature et position de la cible.

9. Procédé selon l'une des revendications précédentes, dans lequel l'estimation des performances de détection du radar de l'étape (3) de contrôle de l'altitude de consigne comprend une estimation manuelle (13) par un opérateur de la surface équivalente radar (SER) de la cible à partir (12) d'attributs de la cible comprenant la longueur, la forme, le nombre et la position des superstructures de la cible à partir des mesures du radar.

10. Procédé selon la revendication 9, dans lequel l'estimation des performances de détection du radar de l'étape (3) de contrôle de l'altitude de consigne comprend une corrélation de l'estimation automatique de la surface équivalente radar et de l'estimation manuelle par un opérateur de la surface équivalente radar.

## Patentansprüche

1. Verfahren zur Verwaltung der Flughöhe eines mit einem Bordradar versehenen Luftfahrzeugs, Folgendes umfassend:
- einen Schritt (2) der Berechnung während des Fluges einer Sollflughöhe, die das Luftfahrzeug einnimmt, umfassend einen ersten Teilschritt (6), der ein fortgeschrittenes Ausbreitungsmodell APM implementiert, das als Eingabe Messungen von Parametern verwendet, die für die Umgebungsatmosphäre repräsentativ sind, und als Ausgabe einen Verstärkungs-/Dämpfungskoeffizienten der Radarsignale ausgibt, der als Eingabe eines zweiten Teilschritts (7) zur Berechnung einer Sollflughöhe anhand einer Schätzung der Radar-Erkennungsleistung unter Verwendung eines Modells des Radars verwendet wird; und
- einen Schritt (3) der Kontrolle der Sollflughöhe, die das Luftfahrzeug eingenommen hat, unter Verwendung eines Vergleichs (15) zwischen einer Schätzung der Erkennungsleistung des Radars unter Verwendung eines Modells des Radars und einer Messung der Erkennungsleistung des Radars.

2. Verfahren nach Anspruch 1, umfassend einen Schritt (1) zur vorbestimmten Berechnung einer empfohlenen Flughöhe, der einen ersten Teilschritt (4) umfasst, der das fortgeschrittene Ausbreitungsmodell APM implementiert, das vorbestimmte Daten von Parametern, die für die Umgebungsatmosphäre repräsentativ sind, als Eingabe verwendet, und einen Verstärkungs-/Dämpfungskoeffizienten der Radarsignale als Ausgabe ausgibt, der als Eingabe für einen zweiten Teilschritt (5) der Berechnung einer empfohlenen Flughöhe anhand einer Schätzung der Radarerkennungsleistung und des Modells des Radars verwendet wird, wobei die empfohlene Flughöhe als Eingabe für den Schritt der Berechnung im Flug einer Sollflughöhe verwendet wird, um die Manöver im Flug zu begrenzen, die für den Schritt der Berechnung im Flug einer Sollflughöhe rund um diese zur Berechnung der Sollflughöhe empfohlene Flughöhe notwendig sind.

3. Verfahren nach Anspruch 2, wobei die vorbestimmten Daten von Parametern, die für die Umgebungsatmosphäre repräsentativ sind, während des Fluges des Luftfahrzeugs aktualisiert werden.

4. Verfahren nach einem der vorhergehenden Ansprüche, wobei die Leistung des Radars eine Erkennungswahrscheinlichkeit eines Ziels umfasst.

5. Verfahren nach einem der vorhergehenden Ansprüche, wobei die Parameter, die für die Umgebungsatmosphäre repräsentativ sind, Temperatur, Druck, Luftfeuchtigkeit, Windgeschwindigkeit und Wellenhöhe umfassen.

6. Verfahren nach einem der vorhergehenden Ansprüche, wobei der Vergleich (15) zwischen einer Schätzung der Erkennungsleistung des Radars und einer Messung der Erkennungsleistung des Radars aus dem Schritt der Kontrolle der Sollflughöhe ein erstes neuronales Netzwerk (16) verwendet, das einen Dämpfungs-/Verstärkungskoeffizienten der Radarsignale anhand von Messungen und vorbestimmten Daten von Parametern, die für die Umgebungsatmosphäre repräsentativ sind, erstellt.

7. Verfahren nach einem der vorhergehenden Ansprüche, wobei der Vergleich (15) zwischen einer Schätzung der Erkennungsleistung des Radars und einer Messung der Erkennungsleistung des Radars aus dem Schritt der Kontrolle der Sollflughöhe ein zweites neuronales Netzwerk (17) verwendet, das einen Reflektionskoeffizienten und eine Impulsivität des umgebenden Meeres-Clutters anhand von Messungen von vorbestimmten Daten von Parametern, die für die Umgebungsatmosphäre repräsentativ sind, erstellt.

8. Verfahren nach einem der vorhergehenden Ansprüche, wobei die Schätzung der Erkennungsleistung des Radars in dem Schritt (3) der Kontrolle der Sollflughöhe eine automatische Schätzung (11) des Radarquerschnitts (SER) des Ziels anhand (10) einer Ortung eines vom Radar erkannten Ziels und von selbst gemeldeten Informationen (AIS, ADS-B) über Art und Position des Ziels umfasst.

9. Verfahren nach einem der vorhergehenden Ansprüche, wobei die Schätzung der Erkennungsleistung des Radars in dem Schritt (3) der Kontrolle der Sollflughöhe eine manuelle Schätzung (13) des Radarquerschnitts (SER) des Ziels durch einen Bediener anhand von (12) Attributen des Ziels, die die Länge, die Form, die Anzahl und die Position der Aufbauten des Ziels anhand der Messungen des Radars umfasst.

10. Verfahren nach Anspruch 9, wobei die Schätzung der Erkennungsleistung des Radars in dem Schritt (3) der Kontrolle der Sollflughöhe eine Korrelation der automatischen Schätzung des Radarquerschnitts und der manuellen Schätzung des Radarquerschnitts durch einen Bediener umfasst.

## Claims

1. A method for managing the altitude of an aircraft provided with an airborne radar comprising:
- a step (2) of in-flight computation of a setpoint altitude maintained by the aircraft, comprising a first sub-step (6) implementing an advanced propagation model APM, which, as input, uses measurements of parameters representing the surrounding atmosphere and, as output, provides an amplification/attenuation coefficient of the radar signals used as input for a second sub-step (7) of computing a setpoint altitude from an estimation of the radar detection performance capabilities using a model of the radar; and
- a step (3) of controlling the setpoint altitude that has been maintained by the aircraft using a comparison (15) between an estimation of the detection performance capabilities of the radar using a model of the radar and a measurement of the detection performance capabilities of the radar.

2. The method according to claim 1, comprising a step (1) of predetermined computation of a recommended altitude comprising a first sub-step (4) implementing the advanced propagation model APM, which, as input, uses predetermined data of parameters representing the surrounding atmosphere and, as output, delivers an amplification/attenuation coefficient of the radar signals used as input for a second sub-step (5) of computing a recommended altitude from an estimation of the radar detection performance capabilities and of the model of the radar, said recommended altitude being provided as input for the step of in-flight computation of a setpoint altitude in order to limit the flight manoeuvres required for the step of in-flight computation of a setpoint altitude around this recommended altitude in order to compute the setpoint altitude.

3. The method according to claim 2, wherein the predetermined data of parameters representing the surrounding atmosphere is updated while the aircraft is in flight.

4. The method according to any of the preceding claims, wherein the performance capabilities of the radar comprise a probability of detecting a target.

5. The method according to any of the preceding claims, wherein said parameters representing the surrounding atmosphere comprise temperature, pressure, hygrometry, wind speed, and wave height.

6. The method according to any of the preceding claims, wherein the comparison (15) between an estimation of the detection performance capabilities of the radar and a measurement of the detection performance capabilities of the radar of the step of controlling the setpoint altitude uses a first neural network (16) establishing an attenuation/amplification coefficient of the radar signals from predetermined measurements and data of parameters representing the surrounding atmosphere.

7. The method according to any of the preceding claims, wherein the comparison (15) between an estimation of the detection performance capabilities of the radar and a measurement of the detection performance capabilities of the radar of the step of controlling the setpoint altitude uses a second neural network (17) establishing a reflection coefficient and an impulsivity of the surrounding sea clutter from predetermined data measurements of parameters representing the surrounding atmosphere.

8. The method according to any of the preceding claims, wherein the estimation of the detection performance capabilities of the radar of the step (3) of controlling the setpoint altitude comprises an automatic estimation (11) of the radar cross section (RCS) of the target from (10) a location of a target detected by the radar and self-declarative information (AIS, ADS-B) of the nature and the position of the target.

9. The method according to any of the preceding claims, wherein the estimation of the detection performance capabilities of the radar of the step (3) of controlling the setpoint altitude comprises a manual estimation (13), by an operator, of the radar cross section (RCS) of the target from attributes (12) of the target comprising the length, the shape, the number and the position of the superstructures of the target from the measurements of the radar.

10. The method according to claim 9, wherein the estimation of the detection performance capabilities of the radar of the step (3) of controlling the setpoint altitude comprises a correlation of the automatic estimation of the radar cross section and the manual estimation, by an operator, of the radar cross section.
